# EUROPEAN PATENT SPECIFICATION

(11) **EP 4 384 297 B1**
(45) Date of publication and mention of the grant of the patent: **02.09.2026**
(21) Application number: 22881649.2
(22) Date of filing: 11.10.2022
(51) Int. Cl.: A63G 25/00, A63G 31/02, A63G 7/00, A63G 31/16, G06T 19/00, A63G 31/00, A63J 11/00

(54) **DYNAMICALLY RECONFIGURED DARK RIDE SYSTEM AND METHODS**
DYNAMISCH REKONFIGURIERTES DUNKELFAHRTSYSTEM UND VERFAHREN
SYSTÈME ET PROCÉDÉS DE MANÈGE NOIR OU D'ÉPOUVANTE RECONFIGURÉS DE MANIÈRE DYNAMIQUE

(30) Priority: 11.10.2021 US 202163254409 P
(43) Date of publication of application: 19.06.2024
(73) Proprietor: Falcon's Beyond Global, LLC, Orlando, FL 32835 (US)
(72) Inventor: JENNIGS, Clifford Allen, Highland, Maryland 20777 (US)
(74) Representative: WP Thompson
(86) International application number: PCT/US2022/046271
(87) International publication number: WO 2023/064266

(56) References cited:
- US-A1- 2010 053 029
- US-A1- 2013 145 953
- US-A1- 2014 277 849
- US-A1- 2015 343 317
- US-A1- 2017 225 084
- US-A1- 2017 285 636
- US-A1- 2020 164 283
- US-A1- 2020 398 173

## Description

### RELATION TO OTHER APPLICATIONS

This application claims priority through United States Provisional Application 63/254,409 filed on October 11, 2020.

### BACKGROUND

Dark ride systems can provide an immersive amusement ride experience but may also require a large amount of space and one or more tracks, track switches, track-related sensors or trenching. Some require use of "super-flat" flooring such as concrete. These can all add to the cost and complexity of providing a dark ride amusement ride experience.

Document US2010053029A1 discloses a mobile set configured to include one or more projection devices to display a media presentation to a viewer. The mobile set may be configured to follow a fixed path or may move through autonomous navigation. In one embodiment, the mobile set may be included as part of an amusement park ride to interact with the ride patrons and provide them with a greater entertainment experience. For example, the mobile projected set may be synchronized to move with a carrier vehicle carrying the ride patrons and project a presentation or display to the ride patrons during the ride. Placing the projected scene on a mobile set allows the patrons to interact with the projected scene for a longer period of time then if the projected scene was stationary. Further, the mobile sets may be used to configure and control sightlines through the ride to provide a more dynamic environment for the amusement park ride.

### SUMMARY OF THE INVENTION

The present invention is directed to a dark ride system according to claim 1, and a method of providing a ride experience according to 6.

Additional features and embodiments of the invention are defined in the dependent claims.

### FIGURES

Various figures are included herein which illustrate aspects of embodiments of the disclosed inventions.
**Fig. 1** is a top-down plan view of an exemplary dark ride system;
**Fig. 2** is a top-down view of an exemplary dark ride system in partial perspective;
**Fig. 3** is a top-down plan view of an exemplary dark ride system in partial perspective showing passenger vehicles interacting on a main operating floor;
**Fig. 4** is a top-down plan view of an exemplary dark ride system in partial perspective showing scene transmorphing during diversion of passenger attention;
**Fig. 5** is a top-down plan view of an exemplary dark ride system in partial perspective showing passenger vehicle isolation in a rearranged ride show scene;
**Fig. 6** is a top-down plan view of an exemplary dark ride system in partial perspective showing an animated character reveal to passenger vehicles;
**Fig. 7** is a top-down plan view of an exemplary dark ride system in partial perspective showing an animated character reveal to passenger vehicles from a passenger perspective;
**Fig. 8** is a top-down plan view of an exemplary dark ride system in partial perspective showing dynamic scene change, splitting passenger vehicles into groups;
**Fig. 9** is a top-down plan view of an exemplary dark ride system in partial perspective showing rearrangement of scene elements into a large floor space;
**Fig. 11** is a top-down plan view of an exemplary dark ride system in partial perspective showing passenger vehicles returning to an unload/load area;
**Fig. 12** is a view in partial perspective of an exemplary passenger vehicle; and
**Fig. 13** is a block diagram of an exemplary controller.

### DESCRIPTION OF EXEMPLARY EMBODIMENTS

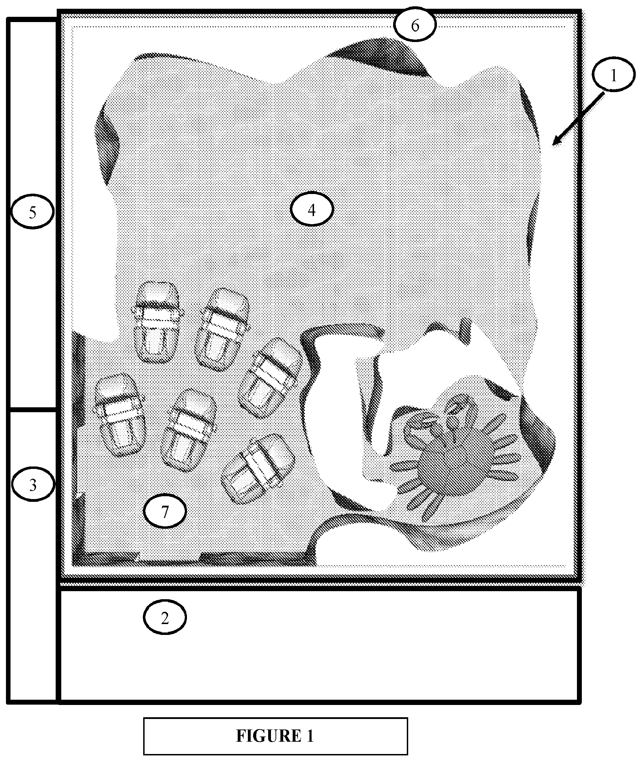

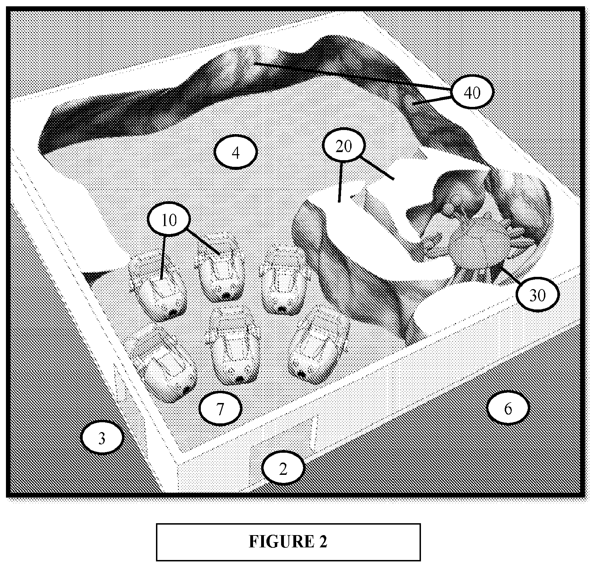

In a first embodiment, referring generally to **Fig. 1** and **Fig. 2****,** dark ride system 1 typically comprises ride space 4; a set of wirelessly-controlled and tracklessly-guided passenger vehicle platforms 10 dispatchable within ride space 4; a set of wirelessly-controlled and tracklessly-guided themed scenery vehicle platforms 20 dispatchable within the ride space, each capable of carrying a section or element of themed scenery; load and unload area 7 for passengers disposed proximate ride space 4; and control system 5. Additionally, static elements such as physical and/or projected scenery (not specifically shown in the figures) may be disposed within or proximate to ride space 4.

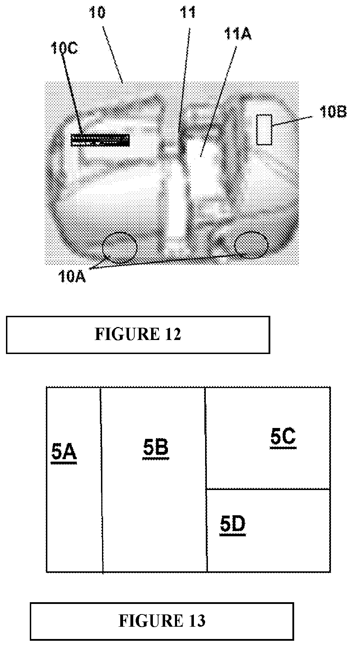

Typically, referring additionally to **Fig. 12****,** each wirelessly-controlled and tracklessly-guided passenger vehicle platform 10 comprises vehicle motive system 10A comprising a mechanical motion generator and a vehicle transporter; vehicle motion controller 10B operatively in communication with the vehicle motive system 10A; and passenger accommodation area 11. The mechanical motion generator is typically configured to impart rotational or translational motion upon passenger accommodation area 11 in a plurality of degrees of freedom, such as yaw, pitch, roll and surge.

Referring back to **Fig. 1** and **Fig. 2****,** a predetermined subset of the set of wirelessly-controlled and tracklessly-guided themed scenery vehicle platforms 20 may comprise equipment (not shown in the figures) to actuate a joint, illuminate a feature, project a sound, display video imagery, operate a special effect, as necessary for the story involved in the ride show.

In embodiments, ride system 1 comprises an area of around 62 feet x 62 feet (18.9 meters x 18.9 meters).

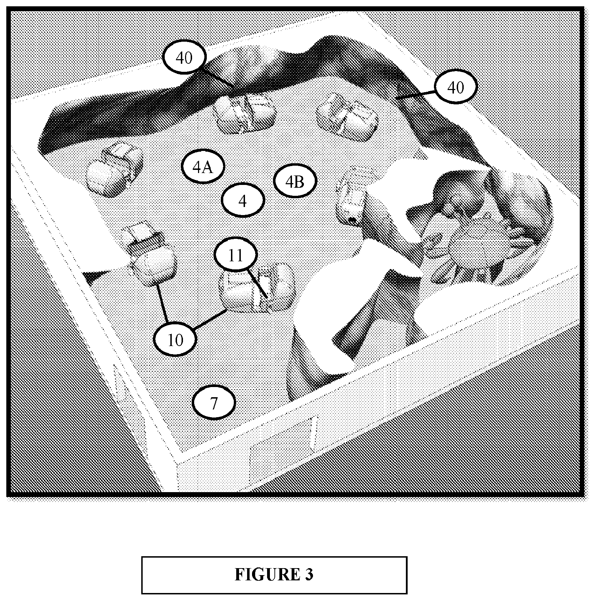

Referring additionally to **Fig. 3****,** in embodiments, ride space 4 comprises or otherwise defines a space divided in scenic areas 4A,4B, each with its own aesthetic treatments and set of wirelessly-controlled and tracklessly-guided themed scenery vehicle platforms 20. The treatments may be such as natural treatments (e.g., undersea, mountains, caves, or the like, or a combination thereof), man-made treatments (e.g., buildings, dungeons, ships, cities, or the like, or a combination thereof), fantastical treatments (e.g., sci-fi, castles, fairy-tale settings, or the like, or a combination thereof), or the like, or a combination thereof.

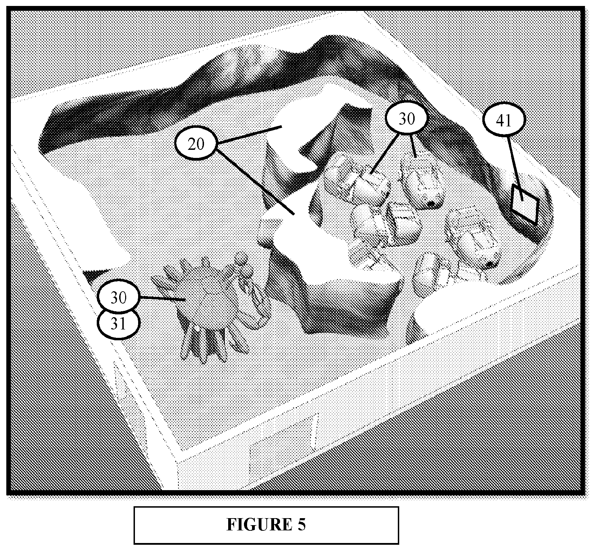

Referring additionally to **Fig. 5****,** ride space 4 may be dynamically reconfigured during a ride show, permitted the same space to be reconfigured for different scenes and allowing a plurality of scenes to share the same footprint, thus allowing a reasonably elaborate overall show to fit within a comparatively small facility.

Referring additionally to **Fig. 13****,** control system 5 typically comprises one or more scenery-bearing vehicle controllers 5A operatively in communication with the set of wirelessly-controlled and tracklessly-guided themed scenery vehicle platforms 20 **(****Fig. 2****)** and adapted to control the set of wirelessly-controlled and tracklessly-guided themed scenery vehicle platforms 20 during a show to form a plurality of variously-shaped areas within ride space 4, presenting varying aspects of mobile scenery at differing times to passengers; passenger vehicle platform controller 5B operatively in communication with the set of wirelessly-controlled and tracklessly-guided passenger vehicle platforms 10 **(****Fig. 2****)** and adapted to control the set of wirelessly-controlled and tracklessly-guided passenger vehicle platforms 10 through changing scenery during a show; and show element controller 5C, comprising an environment controller adapted to control aspects of lighting, projection, audio and scenery, typically using one or more sub-controllers.

Referring back to **Fig. 1** and **Fig. 2****,** in embodiments ride space 4 further comprises a predetermined set of static elements such as physical scenery 40,42 or projected scenery 41 disposed at least partially within ride space 4.

Typically, each wirelessly-controlled and tracklessly-guided passenger vehicle platform 10 dispatchable comprises passenger area 11 **(****Fig. 12****)** which can accommodate one or more passengers.

In most embodiments, the set of wirelessly-controlled and tracklessly-guided themed scenery vehicle platforms 20 are capable of moving independently with respect to, but in coordination with, movement of wirelessly-controlled and tracklessly-guided passenger vehicle platforms 10.

In embodiments, dark ride system 1 further comprises a set of wirelessly-controlled and tracklessly-guided figure vehicle platforms 30 dispatchable within ride space 4. In these embodiments, control system 5 further comprises one or more figure vehicle platform controllers 5D **(****Fig. 13****)** operatively in communication with the set of wirelessly-controlled and tracklessly-guided figure vehicle platforms 30 and adapted to control the set of wirelessly-controlled and tracklessly-guided figure vehicle platforms 30 through changing scenery during a show.

The set of wirelessly-controlled and tracklessly-guided figure vehicle platforms 30 may comprise an animation-bearing vehicle platform 30 adapted for visual interaction with passengers in the set of wirelessly-controlled and tracklessly-guided passenger vehicle platforms 10.

Ride space 4 is typically configured to allow movement of the set of wirelessly-controlled and tracklessly-guided themed scenery vehicle platforms 20 during a show. This movement of the set of wirelessly-controlled and tracklessly-guided themed scenery vehicle platforms 20 will typically reconfigure ride space 4 for different scenes, thus allowing a plurality of scenes to share the same footprint.

**In the operation of exemplary methods,** referring back to **Fig. 1****,** a ride experience may be provided using ride system 1, as described above, by allowing a predetermined set of passengers to board a predetermined subset of the set of wirelessly-controlled and tracklessly-guided passenger vehicle platforms 10 dispatchable within ride space 4 at load and unload area for passengers 7. The set of wirelessly-controlled and tracklessly-guided themed scenery vehicle platforms 20 are positioned into an initial spatial arrangement within ride space 4, typically before the set of wirelessly-controlled and tracklessly-guided passenger vehicle platforms 10 are dispatched within ride space 4. Using controller 5, lighting, projection, audio and other show elements related to an overall ride-show experience during a ride show are controlled and the set of wirelessly-controlled and tracklessly-guided passenger vehicle platforms 10 dispatched into ride space 4 at a predetermined time into the ride show.

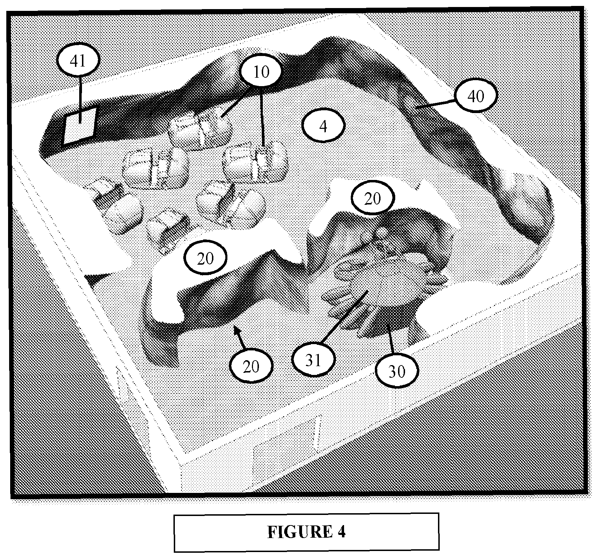

As the passengers in their wirelessly-controlled and tracklessly-guided passenger vehicle platforms 10 are made to face one area of scenery defined by the set of wirelessly-controlled and tracklessly-guided themed scenery vehicle platforms 20, e.g., **Fig. 3****,** control system 5 is used to mutually and cooperatively choreograph and change a predetermined subset of the set of wirelessly-controlled and tracklessly-guided themed scenery vehicle platforms 20 during the ride show. The set of wirelessly-controlled and tracklessly-guided themed scenery vehicle platforms 20 may be controlled during a ride show to form a plurality of variously-shaped areas, presenting varying aspects of the mobile scenery at differing times to passengers, e.g., **Figs. 4-5**.

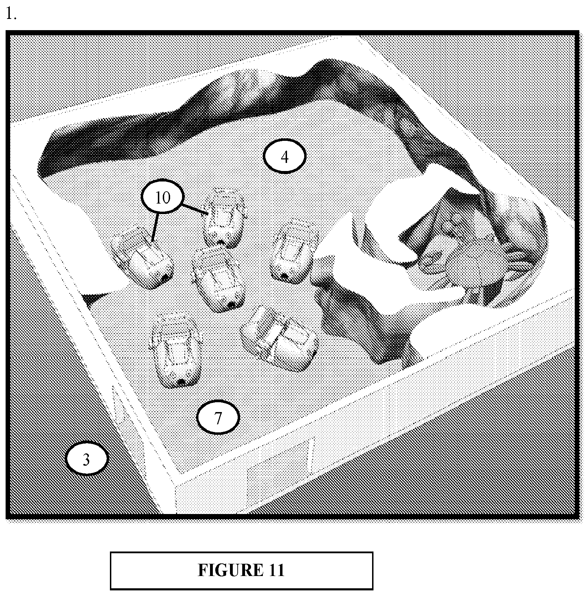

At a conclusion of the ride show, e.g., **Fig. 11****,** control system 5 **(****Fig. 2****)** is used to position the set of wirelessly-controlled and tracklessly-guided vehicle passenger platforms 10 at unload area 7 and the predetermined set of passengers allowed to exit the set of wirelessly-controlled and tracklessly-guided vehicle passenger platforms 10 at unload area 7.

In certain embodiments, one or more passengers are allowed to interact with ride space 4 and an area or sequence of the ride show made to respond to the passenger interaction such as by controller system 5.

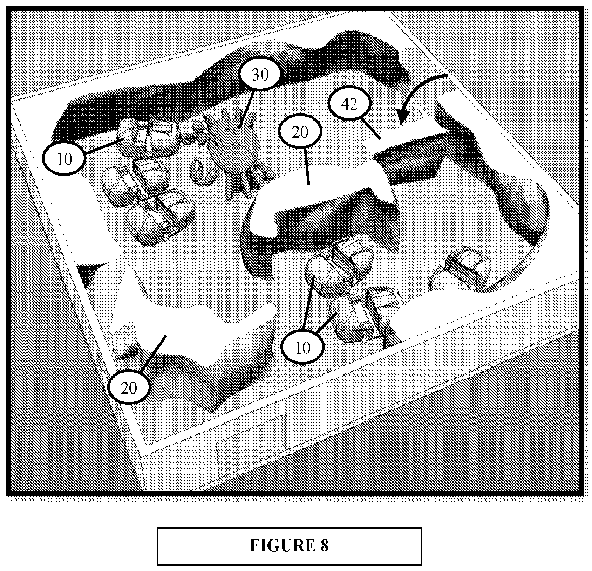

Typically, the ride show starts with the set of wirelessly-controlled and tracklessly-guided passenger vehicle platforms 10 grouped together in groups, e.g., **Fig. 4** and **Fig. 8****,** and, as the ride show commences the set of wirelessly-controlled and tracklessly-guided passenger vehicle platforms 10 are moved away from each other e.g., **Fig. 8****,** and the set of wirelessly-controlled and tracklessly-guided passenger vehicle platforms 10 recombined into different group arrangements.

In certain embodiments, the set of wirelessly-controlled and tracklessly-guided passenger vehicle platforms 10 are dispatched into ride space 4 in groups through a plurality of show spaces 4A,4B within ride space 4, where each show space is provided with its own set of wirelessly-controlled and tracklessly-guided themed scenery vehicle platforms 20 and each group simultaneously cycles through the ride show, with the result being multiplied throughput.

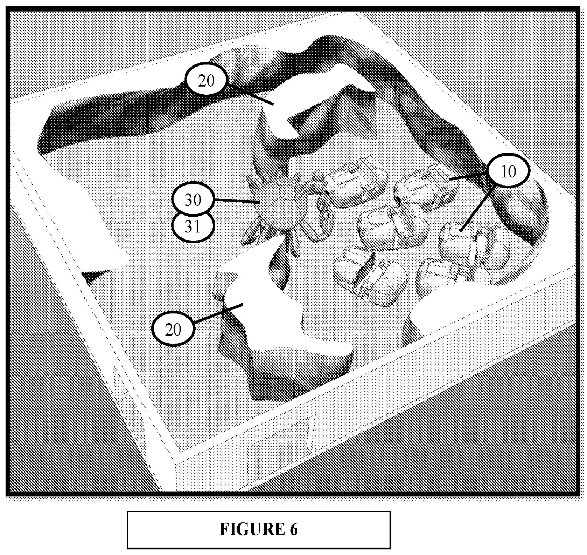

Control system 5 may move the set of wirelessly-controlled and tracklessly-guided themed scenery vehicle platforms 20 in such a way as to open or close a passage, reduce or increase the size of a space, and hide or reveal a story element where such reveal may be dramatic e.g., **Fig. 5** and **Fig. 6****.**

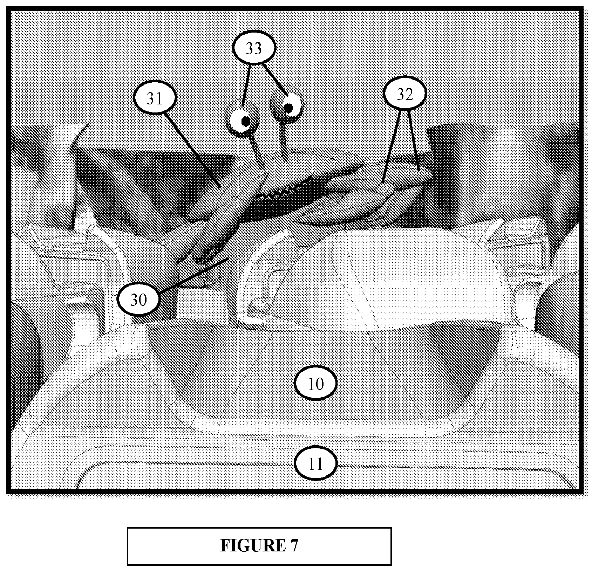

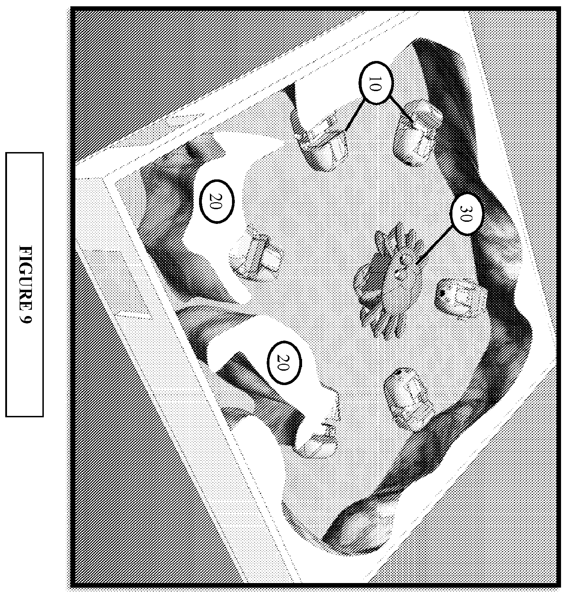

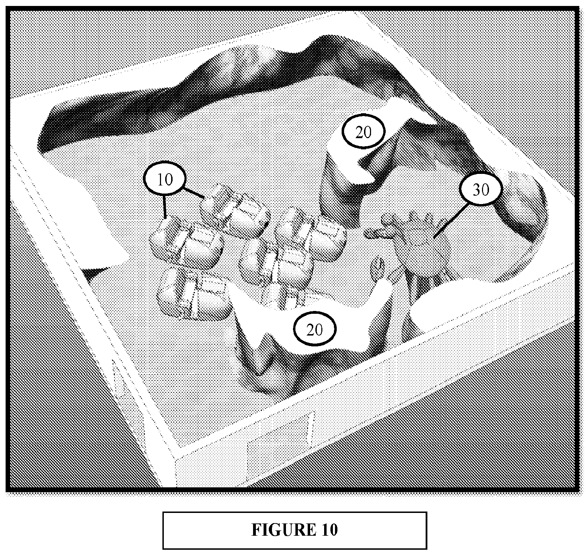

Referring generally to **Fig. 2 - Fig. 10****,** in embodiments comprising the set of wirelessly-controlled and tracklessly-guided figure vehicle platforms 30 which comprise an animation-bearing vehicle 31 **(****Fig. 6****)** adapted for visual interaction with passengers, animation-bearing vehicle 31 is typically dispatched at an initial location within ride space 4, e.g., at a beginning of the ride show, and hidden from passenger view by one or more wirelessly-controlled and tracklessly-guided themed scenery vehicle platforms 20 of the set of wirelessly-controlled and tracklessly-guided themed scenery vehicle platforms 20. At a predetermined time, animation-bearing vehicle 31, wirelessly-controlled and tracklessly-guided themed scenery vehicle platform 20, or both animation-bearing vehicle 31 and wirelessly-controlled and tracklessly-guided themed scenery vehicle platform 20 move to reveal animation-bearing vehicle 31. Animation-bearing vehicle 31 may comprise dynamically controllable features and/or static features, e.g., features 32-33 **(****Fig. 7****).**

In embodiments, wirelessly-controlled and tracklessly-guided themed scenery vehicle platform 20 comprises two or more wirelessly-controlled and tracklessly-guided themed scenery vehicle platforms 20. In these embodiments, moving animation-bearing vehicle 31, wirelessly-controlled and tracklessly-guided themed scenery vehicle platform 20, or both animation-bearing vehicle 31 and wirelessly-controlled and tracklessly-guided themed scenery vehicle platform 20 may comprise positioning the plurality of wirelessly-controlled and tracklessly-guided themed scenery vehicle platforms 20 intermediate animation-bearing vehicle 31 and one or more wirelessly-controlled and tracklessly-guided passenger vehicle platforms 10 of the set of wirelessly-controlled and tracklessly-guided passenger vehicle platforms 10 **(****Fig. 2****)** and moving the plurality of wirelessly-controlled and tracklessly-guided themed scenery vehicle platforms 20 away from each other at a predetermined time **(****Fig. 6****).**

In certain of embodiments, wirelessly-controlled and tracklessly-guided themed scenery vehicle platform 20 may comprise a plurality of wirelessly-controlled and tracklessly-guided themed scenery vehicle platforms 20 configured to appear passengers as a solid impenetrable surface when initially disposed within the ride space 4 **(****Fig. 2****).**

In various embodiments, a ride show may be initiated with the set of wirelessly-controlled and tracklessly-guided passenger vehicle platforms 10 surrounded by or intermixed with the set of wirelessly-controlled and tracklessly-guided themed scenery vehicle platforms 20, such as by having a physical and/or projected walking surface, e.g., a moving surface set, and scenery, e.g., rocks, foliage, architecture, or the like, or a combination thereof, define an initial appearance of a combined whole, e.g., having the walking surface disposed atop the set of wirelessly-controlled and tracklessly-guided themed scenery vehicle platforms 20 and/or raised above a vehicle operating floor. In these embodiments, as the set of wirelessly-controlled and tracklessly-guided passenger vehicle platforms 10 move and break away from each other, the walking surface is allowed to depart with a predetermined subset of set of wirelessly-controlled and tracklessly-guided themed scenery vehicle platforms 20.

Referring generally to **Fig. 12****,** in embodiments, passenger accommodation area 11 comprises one or more exposed benches 11A and the set of wirelessly-controlled and tracklessly-guided passenger vehicle platforms 10 is initially grouped to appear as a theater comprising a predetermined number of these benches 11A. In these embodiments, as the ride show begins, a predetermined set of actions are made to occur in front of the set of wirelessly-controlled and tracklessly-guided passenger vehicle platforms 10, such as on a stage or projected on a screen. As the ride show progresses, the set of wirelessly-controlled and tracklessly-guided passenger vehicle platforms 10 are moved into separately spaced and cooperatively coordinated wirelessly-controlled and tracklessly-guided passenger vehicle platforms 10 and ride controller 5 is programmed to send each wirelessly-controlled and tracklessly-guided passenger vehicle platform 10 into other or separate story spaces in a choreographed manner.

In any embodiment, audio, lighting, projection and other resources may be shared between scenes.

In certain embodiments, one or more wirelessly-controlled and tracklessly-guided vehicle passenger platforms 10 are made to face a first area of scenery and a configuration of a predetermined number of the set of wirelessly-controlled and tracklessly-guided themed scenery vehicle platforms 20 and/or elements of themed scenery changed behind or otherwise out of the sight of wirelessly-controlled and tracklessly-guided vehicle passenger platforms 10. This can be accomplished using ride controller 5 to control the set of wirelessly-controlled and tracklessly-guided themed scenery vehicle platforms 20 and/or elements of themed scenery during a ride show to form a plurality of variously-shaped areas. In these embodiments, presenting varying aspects of the mobile scenery at differing times to passengers further comprises reconfiguring the set of wirelessly-controlled and tracklessly-guided themed scenery vehicle platforms 20 and/or elements of themed scenery during a ride show for different scenes.

According to the claimed invention, two or more of the set of wirelessly-controlled and tracklessly-guided themed scenery vehicle platforms 20 and/or elements of themed scenery may be paired or otherwise associated to present an apparently solid area and be unpaired or otherwise disassociated to create a desired predetermined effect such as opening or closing a passageway through which wirelessly-controlled and tracklessly-guided vehicle passenger platform 10 may be moved, reducing or increasing a size of a ride space, hiding or revealing a story element, or the like, or a combination thereof.

Where the predetermined set of wirelessly-controlled and tracklessly-guided vehicle passenger platforms 10 comprises a plurality of wirelessly-controlled and tracklessly-guided vehicle passenger platforms 10, ride controller 5 may be used to control wirelessly-controlled and tracklessly-guided vehicle passenger platforms 10 through changing scenery during a ride show by running the plurality of wirelessly-controlled and tracklessly-guided vehicle passenger platforms 10 in groups or platoons through a plurality of show spaces, where each space may have its own mobile scenery, and allowing each platoon to simultaneously cycle through the ride.

In embodiments, using ride controller 5 further comprises controlling the set of wirelessly-controlled and tracklessly-guided themed scenery vehicle platforms 20 during a show to dynamically form a plurality of variously-shaped areas, presenting varying aspects of the mobile scenery at differing times to passengers, either stochastically or deterministically.

The set of wirelessly-controlled and tracklessly-guided themed scenery vehicle platforms 20 may be used during a show to actuate a joint, illuminate a feature, project a sound, display video imagery, operate a special effect as necessary for a story involved, or the like, or a combination thereof.

Using wirelessly-controlled and tracklessly-guided themed scenery vehicle platforms 20 during a ride show may comprise creating a show in ride space 4 which is divided into scenic areas using wirelessly-controlled and tracklessly-guided themed scenery vehicle platforms 20, each of which may comprise its own aesthetic treatments and mobile wirelessly-controlled and tracklessly-guided themed scenery vehicle platforms 20.

In embodiments, load area 7 changes size, e.g., becomes larger or smaller, as walls 42 move outward by using with a plurality of rows of mobile wall sections which move away, spread, and combine into a single wall 42.

In embodiments, the set of wirelessly-controlled and tracklessly-guided themed scenery vehicle platforms 20 may be arranged as a maze, and passengers allowed to make choices of which paths within the maze to take. Ride controller 5 may be used to change maze components arrangement as the set of wirelessly-controlled and tracklessly-guided passenger vehicle platforms 10 progress within the maze. The show may, at the end of this sequence, cause all maze components to withdraw and allow the set of wirelessly-controlled and tracklessly-guided passenger vehicle platforms 10 to proceed from them.

In certain embodiments, the set of wirelessly-controlled and tracklessly-guided themed scenery vehicle platforms 20, the set of wirelessly-controlled and tracklessly-guided vehicle passenger platforms 10, or both carry portions of buildings (either or both of interior or exterior portions). The portions of buildings may be dynamically arranged to present a different scene or room or building on the opposite side.

In embodiments, one or more passengers may be allowed to dynamically interact with the ride show such as via on-board laser-shooting equipment 10C **(****Fig. 12****)** present in or attached to wirelessly-controlled and tracklessly-guided passenger vehicle platform 10 and one or more areas and/or ride show sequences made to respond to the passenger's dynamic interaction, e.g., by scoring. The interaction may then lead to a further, e.g., "bonus," set of ride scenes made available to the passengers.

The foregoing disclosure and description of the inventions are illustrative and explanatory. Various changes in the size, shape, and materials, as well as in the details of the illustrative construction and/or an illustrative method may be made. The scope of the invention is defined by the appended claims.

## Claims

1. A dark ride system (1), comprising:
a) a ride space (4)
b) a set of wirelessly-controlled and tracklessly-guided passenger vehicle platforms (10) dispatchable within the ride space (4), each wirelessly-controlled and tracklessly-guided passenger vehicle platform (10) comprising:
i) a passenger accommodation area (11);
ii) a vehicle motive system (10A), comprising:
(1) a mechanical motion generator configured to impart rotational or translational motion upon the passenger accommodation area (11) in a plurality of degrees of freedom; and
(2) a vehicle transporter; and
iii) a vehicle motion controller (10B) operatively in communication with the vehicle motive system (10A);
c) a set of wirelessly-controlled and tracklessly-guided themed scenery vehicle platforms (20) dispatchable within the ride space (4);
d) a load and unload area (7) for passengers disposed proximate the ride space (4), and
e) a control system (5), comprising:
i) a scenery-bearing vehicle controller (SA) operatively in communication with the set of wirelessly-controlled and tracklessly-guided themed scenery vehicle platforms (20) and adapted to control the set of wirelessly-controlled and tracklessly-guided themed scenery vehicle platforms (20) during a show to form a plurality of variously-shaped areas within the ride space ( 4) presenting varying aspects of mobile scenery at differing times to passengers, wherein controlling the set of themed scenery vehicle platforms (20) comprises opening and/or closing a passageway through which the wirelessly-controlled and tracklessly-guided passenger vehicle platforms (10) may be moved such that multiple distinct scenes occupy the same physical footprint at different times during a show;
ii) a passenger vehicle platform controller (5B) operatively in communication with the set of wirelessly-controlled and tracklessly-guided passenger vehicle platforms (10) and adapted to control the set of wirelessly-controlled and tracklessly-guided passenger vehicle platforms (10) through changing scenery during a show; and
iii) a show element controller (5C), comprising an environment controller.

2. The ride vehicle system of Claim 1, further comprising a predetermined set of static elements disposed at least partially within the ride space (4).

3. The ride vehicle system of Claim 1, wherein:
a) the system further comprises a set of wirelessly-controlled and tracklessly-guided figure vehicle platforms (30) selectively and controllably dispatchable within the ride space (4); and
b) the control system (5) further comprises a figure vehicle platform controller (5D) operatively in communication with the set of wirelessly-controlled and tracklessly-guided figure vehicle platforms (30) and adapted to control the set of wirelessly-controlled and tracklessly-guided figure vehicle platforms (30) through changing scenery during a show.

4. The ride system of Claim 3 wherein the set of wirelessly-controlled and tracklessly-guided figure vehicle platforms (30) comprises an animation-bearing vehicle (30) adapted for visual interaction with passengers.

5. The ride system of Claim 1, wherein the ride space (4) is configured to allow movement of the set of wirelessly-controlled and tracklessly-guided themed scenery vehicle platforms (20) during a show to reconfigure the ride space ( 4) for different scenes and allowing a plurality of scenes to share the same footprint, or wherein the ride space (4) comprises a space divided into scenic areas (4A,4B), each with its own aesthetic treatments and set of wirelessly-controlled and
tracklessly-guided themed scenery vehicle platforms (20).

6. A method of providing a ride experience, using a dark ride system (1) comprising a ride space (4);
a set of wirelessly-controlled and tracklessly-guided passenger vehicle platforms (10) dispatchable within the ride space (4), each wirelessly-controlled and tracklessly-guided passenger vehicle platform comprising a passenger accommodation area (11), a vehicle motive system (10A) which comprises a mechanical motion generator configured to impart rotational or translational motion upon the passenger accommodation area (11) in a plurality of degrees of freedom, and a vehicle transporter, and a vehicle motion controller (10B) operatively in communication with the vehicle motive system (10A);
a set of wirelessly-controlled and tracklessly-guided themed scenery vehicle platforms (20) dispatchable within the ride space (4); a load and unload area (7) for passengers disposed proximate the ride space ( 4); and
a control system (5) which comprises a scenery-bearing vehicle controller (5A) operatively in communication with the set of wirelessly-controlled and tracklessly-guided themed scenery vehicle platforms (20) and adapted to control the set of wirelessly-controlled and tracklessly-guided themed scenery vehicle platforms (20) during a show to form a plurality of variously-shaped areas within the ride space (4) presenting varying aspects of mobile scenery at differing times to passengers including opening and/or closing a passageway through which the wirelessly-controlled and tracklessly-guided passenger vehicle platforms (10) may be moved such that multiple distinct scenes occupy the same physical footprint at different times during a show, a passenger vehicle platform controller (5B) operatively in communication with the set of wirelessly-controlled and tracklessly-guided passenger vehicle platforms (10) and adapted to control the set of wirelessly-controlled and tracklessly-guided passenger vehicle platforms (10) through changing scenery during a show, and a show element controller (5C), comprising an environment controller, the method comprising:
a) allowing a predetermined set of passengers to board a predetermined subset of the set of wirelessly-controlled and tracklessly-guided passenger vehicle platforms (10) dispatchable within the ride space (4) at the load and unload area (7) for passengers;
b) positioning the set of wirelessly-controlled and tracklessly-guided themed scenery vehicle platforms (20) dispatchable within the ride space (4) into an initial spatial arrangement within the ride space (4);
c) using the control system (5) to control lighting, projection, audio and other show elements related to the overall ride-show experience during a ride show;
d) dispatching the set of wirelessly-controlled and tracklessly-guided passenger vehicle platforms (10) into the ride space ( 4) at a predetermined time into the ride show;
e) as the passengers in their wirelessly-controlled and tracklessly-guided passenger vehicle platforms (10) are made to face one area of scenery defined by the set of wirelessly-controlled and tracklessly-guided themed scenery vehicle platforms (20), using the control system (5) to mutually choreograph and change a predetermined subset of the set of wirelessly-controlled and tracklessly-guided themed scenery vehicle platforms (20) during the ride show;
f) at a conclusion of the ride show, using the control system (5) to position the wirelessly-controlled and tracklessly-guided vehicle passenger platforms at the unload area; and g) allowing the predetermined set of passengers to exit the wirelessly-controlled and tracklessly-guided vehicle passenger platforms at the unload area.

7. The method of Claim 6, further comprising:
a) allowing a passenger to interact with the ride space (4); and
b) making an area or sequence of the ride show responsive to the passenger interaction,
or further comprising:
c) dispatching the set of wirelessly-controlled and tracklessly-guided passenger vehicle platforms (10) into the ride space (4) in groups of wirelessly-controlled and tracklessly-guided passenger vehicle platforms (10) through a plurality of show spaces within the ride space (4);
d) providing each show space with its own set of wirelessly-controlled and tracklessly-guided themed scenery vehicle platforms (20); and
e) allowing each group of wirelessly-controlled and tracklessly-guided passenger vehicle platforms (10) to simultaneously cycle through the ride space ( 4) during the ride show.

8. The method of Claim 6, wherein the ride show starts with the set of wirelessly-controlled and tracklessly-guided passenger vehicle platforms (10) grouped together in groups of wirelessly- controlled and tracklessly-guided passenger vehicle platforms (10) and, as the ride show commences:
a) moving the groups of wirelessly-controlled and tracklessly-guided passenger vehicle platforms (10) away from each other; and
b) recombining the groups of wirelessly-controlled and tracklessly-guided passenger vehicle platforms (10) into different group arrangements during the ride show,
or wherein the control system (5) moves the set of wirelessly- controlled and tracklessly-guided themed scenery vehicle platforms (20) in such a way as to open or close a passage, reduce or increase the size of a space, and hide or reveal a story element.

9. The method of Claim 6, further comprising a set of wirelessly-controlled and tracklessly- guided figure vehicle platforms (30) disposed within the ride space (4), the set of wirelessly- controlled and tracklessly-guided figure vehicle platforms (30) comprising an animation-bearing vehicle (30) adapted for visual interaction with passengers, the method further comprising:
a) disposing the animation-bearing vehicle (30) at an initial location within the ride space (4) at a beginning of the ride show, the animation-bearing vehicle (30) hidden from view by a wirelessly-controlled and tracklessly-guided themed scenery vehicle platform (20) of the set of wirelessly-controlled and tracklessly-guided themed scenery vehicle platforms (20); and
b) at a predetermined time, moving the animation-bearing vehicle (30), the wirelessly-controlled and tracklessly-guided themed scenery vehicle platform (20), or both the animation-bearing vehicle (30) and the wirelessly-controlled and tracklessly-guided themed scenery vehicle platform (20) to reveal the animation-bearing vehicle (30).

10. The method of Claim 9, wherein:
a) the wirelessly-controlled and tracklessly-guided themed scenery vehicle platform (20) comprises two wirelessly-controlled and tracklessly-guided themed scenery vehicle platforms (20); and
b) moving the animation-bearing vehicle (30), the wirelessly-controlled and tracklessly- guided themed scenery vehicle platform (20), or both the animation-bearing vehicle (30) and the wirelessly-controlled and tracklessly-guided themed scenery vehicle platform (20) comprises:
i) positioning the two wirelessly-controlled and tracklessly-guided themed scenery vehicle platforms (20) intermediate the animation-bearing vehicle (30) and a wirelessly-controlled and tracklessly-guided passenger vehicle platform of the set of wirelessly-controlled and tracklessly-guided passenger vehicle platforms (10); and
ii) moving the two wirelessly-controlled and tracklessly-guided themed scenery vehicle platforms (20) away from each other at a predetermined time.

11. The method of Claim 6, wherein the passenger accommodation area (11) comprises an exposed bench and the set of wirelessly-controlled and tracklessly-guided passenger vehicle platforms (10) are initially grouped to appear as a theater having many of these benches, the method further comprising:
a) as the ride show begins, causing a predetermined set of actions to occur in front of the set of wirelessly-controlled and tracklessly-guided passenger vehicle platforms (10);
b) as the ride show progresses, moving the set of wirelessly-controlled and tracklessly-guided passenger vehicle platforms (10) into separately spaced wirelessly-controlled and tracklessly-guided passenger vehicle platforms (10); and
c) using the control system (5) to send each wirelessly-controlled and tracklessly-guided passenger vehicle platform into other story spaces in a choreographed manner.

12. The method of Claim 6, further comprising:
a) making a wirelessly-controlled and tracklessly-guided vehicle passenger platform face one area of scenery; and
b) changing a configuration of the wirelessly-controlled and tracklessly-guided section or element of themed scenery behind the wirelessly-controlled and tracklessly-guided vehicle passenger platform,
or further comprising:
c) using the control system (5) to control the predetermined set of wirelessly-controlled and tracklessly-guided themed scenery vehicle platforms (20) during a show to form a plurality of variously-shaped areas; and
d) presenting varying aspects of the mobile scenery at differing times to passengers further comprises reconfiguring the predetermined set of wirelessly-controlled and tracklessly-guided themed scenery vehicle platforms (20) during a show for different scenes.

13. The method of Claim 6, wherein:
a) the predetermined set of wirelessly-controlled and tracklessly-guided vehicle passenger platforms comprises a plurality of wirelessly-controlled and tracklessly-guided vehicle passenger platforms; and
b) using the control system (5) to control the set of wirelessly-controlled and tracklessly- guided vehicle passenger platforms through changing scenery during the show comprises:
i) running the plurality of wirelessly-controlled and tracklessly-guided vehicle passenger platforms in platoons through a plurality of show spaces, each space having its own mobile scenery; and
ii) allowing each platoon to simultaneously cycle through the ride show
or wherein using the control system (5) further comprises controlling the set of wirelessly-controlled and tracklessly-guided themed scenery vehicle platforms (20) during a show to form a plurality of variously-shaped areas, presenting varying aspects of the mobile scenery at differing times to passengers.

14. The method of Claim 6, wherein the set of wirelessly-controlled and tracklessly-guided themed scenery vehicle platforms (20) are arranged as a maze, the method further comprising:
a) allowing for passenger choices of which paths within the maze to take; and
b) using the control system (5) to change maze components arrangement as the vehicles progress.

15. The method of Claim 6, further comprising:
a) allowing a passenger to dynamically interact with the ride show; and
b) making an area or ride show sequence responsive to the passenger's dynamic interaction.

## Patentansprüche

1. Dunkel-Fahrbetriebsystem (1), umfassend:
a) einen Fahrbetriebraum (4);
b) einen Satz drahtlos gesteuerter und gleislos geführter Fahrgastfahrzeugplattformen (10), die innerhalb des Fahrbetriebraums (4) befördert werden können, wobei die drahtlos gesteuerten und gleislos geführten Fahrgastfahrzeugplattformen (10) jeweils Folgendes umfassen:
i) einen Fahrgastaufnahmebereich (11);
ii) ein Fahrzeugantriebssystem (10A), umfassend:
(1) einen mechanischen Bewegungserzeuger, der dazu konfiguriert ist, Rotations- oder Translationsbewegung in einer Vielzahl von Freiheitsgraden auf den Fahrgastaufnahmebereich (11) aufzubringen; und
(2) einen Fahrzeugtransporter; und
iii) ein Fahrzeugbewegungssteuergerät (10B) in Wirkverbindung mit dem Fahrzeugsantriebssystem (10A);
c) einen Satz drahtlos gesteuerter und gleislos geführter Themenkulissen-Fahrzeugplattformen (20), die innerhalb des Fahrbetriebraums (4) befördert werden können;
d) einen Lade- und Ausladebereich (7) für Fahrgäste, der nahe dem Fahrbetriebraum (4) angeordnet ist, und
e) ein Steuersystem (5), umfassend:
i) ein Steuergerät (SA) eines kulissentragenden Fahrzeugs in Wirkverbindung mit dem Satz drahtlos gesteuerter und gleislos geführter Themenkulissen-Fahrzeugplattformen (20), das dazu angepasst ist, den Satz drahtlos gesteuerter und gleislos geführter Themenkulissen-Fahrzeugplattformen (20) während einer Vorführung zu steuern, um eine Vielzahl von verschieden geformten Bereichen innerhalb des Fahrbetriebraums (4) zu bilden, die Fahrgästen veränderliche Aspekte mobiler Kulissen zu unterschiedlichen Zeiten darbieten, wobei das Steuern des Satzes Themenkulissen-Fahrzeugplattformen (20) das Öffnen und/oder Schließen eines Durchgangs umfasst, durch den die drahtlos gesteuerten und gleislos geführten Fahrgastfahrzeugplattformen (10) derart bewegt werden können, dass mehrere verschiedenartige Kulissen zu unterschiedlichen Zeiten während einer Vorführung dieselbe physischen Standfläche einnehmen;
ii) ein Fahrgastfahrzeugplattform-Steuergerät (5B) in Wirkverbindung mit dem Satz drahtlos gesteuerter und gleislos geführter Fahrgastfahrzeugplattformen (10), das dazu angepasst ist, den Satz drahtlos gesteuerter und gleislos geführter Fahrgastfahrzeugplattformen (10) während einer Vorführung durch wechselnde Kulissen zu steuern; und
iii) ein Vorführungselement-Steuergerät (5C), umfassend ein Umgebungssteuergerät.

2. Fahrbetriebfahrzeugsystem nach Anspruch 1, ferner umfassend einen vorgegebenen Satz statischer Elemente, die mindestens teilweise innerhalb des Fahrbetriebraums (4) angeordnet sind.

3. Fahrbetriebfahrzeugsystem nach Anspruch 1, wobei:
a) das System ferner einen Satz drahtlos gesteuerter und gleislos geführter Figurenfahrzeugplattformen (30) umfasst, die selektiv und steuerbar innerhalb des Fahrbetriebraums (4) befördert werden können; und
b) das Steuersystem (5) ferner ein Figurenfahrzeugplattform-Steuergerät (5D) in Wirkverbindung mit dem Satz drahtlos gesteuerter und gleislos geführter Figurenfahrzeugplattformen (30) umfasst und dazu angepasst ist, den Satz drahtlos gesteuerter und gleislos geführter Figurenfahrzeugplattformen (30) während einer Vorführung durch wechselnde Kulissen zu steuern.

4. Fahrbetriebsystem nach Anspruch 3, wobei der Satz drahtlos gesteuerter und gleislos geführter Figurenfahrzeugplattformen (30) ein animationstragendes Fahrzeug (30) umfasst, das zur visuellen Interaktion mit Fahrgästen angepasst ist.

5. Fahrbetriebsystem nach Anspruch 1, wobei der Fahrbetriebraum (4) dazu konfiguriert ist, Bewegung des Satzes drahtlos gesteuerter und gleislos geführter Themenkulissen-Fahrzeugplattformen (20) während einer Vorführung zu ermöglichen, um den Fahrbetriebraum (4) für unterschiedliche Kulissen umzukonfigurieren und zu ermöglichen, dass eine Vielzahl von Kulissen dieselbe Standfläche gemeinsam nutzen, oder wobei der Fahrbetriebraum (4) einen Raum umfasst, der in Kulissenbereiche (4A, 4B) unterteilt ist, jeder mit seinen eigenen ästhetischen Aufbereitungen und seinem eigenen Satz drahtlos gesteuerter und gleislos geführter Themenkulissen-Fahrzeugplattformen (20).

6. Verfahren zum Bereitstellen eines Fahrbetrieberlebnisses unter Verwendung eines Dunkel-Fahrbetriebsystems (1), umfassend einen Fahrbetriebraum (4);
einen Satz drahtlos gesteuerter und gleislos geführter Fahrgastfahrzeugplattformen (10), die innerhalb des Fahrbetriebraums (4) befördert werden können, wobei die drahtlos gesteuerten und gleislos geführten Fahrgastfahrzeugplattformen jeweils einen Fahrgastaufnahmebereich (11), ein Fahrzeugantriebssystem (10A), das einen mechanischen Bewegungserzeuger umfasst, der dazu konfiguriert ist, Rotations- oder Translationsbewegung in einer Vielzahl von Freiheitsgraden auf den Fahrgastaufnahmebereich (11) aufzubringen, und einen Fahrzeugtransporter und ein Fahrzeugbewegungs-Steuergerät (10B) in Wirkverbindung mit dem Fahrzeugantriebssystem (10A) umfassen;
einen Satz drahtlos gesteuerter und gleislos geführter Themenkulissen-Fahrzeugplattformen (20), die innerhalb des Fahrbetriebraums (4) befördert werden können; einen Lade- und Ausladebereich (7) für Fahrgäste, der nahe dem Fahrbetriebraum (4) angeordnet ist; und
ein Steuersystem (5), das Folgendes umfasst: ein kulissentragendes Fahrzeugsteuergerät (5A) in Wirkverbindung mit dem Satz drahtlos gesteuerter und gleislos geführter Themenkulissen-Fahrzeugplattformen (20), das dazu angepasst ist, den Satz drahtlos gesteuerter und gleislos geführter Themenkulissen-Fahrzeugplattformen (20) während einer Vorführung zu steuern, um eine Vielzahl von verschieden geformten Bereichen innerhalb des Fahrbetriebraums (4) zu bilden, die Fahrgästen zu unterschiedlichen Zeiten veränderliche Aspekte mobiler Kulissen darbieten, einschließlich des Öffnens und/oder Schließens eines Durchgangs, durch den die drahtlos gesteuerten und gleislos geführten Fahrgastfahrzeugplattformen (10) derart bewegt werden können, dass mehrere verschiedenartige Kulissen zu unterschiedlichen Zeiten während einer Vorführung dieselbe physische Standfläche einnehmen, ein Fahrgastfahrzeugplattform-Steuergerät (5B) in Wirkverbindung mit dem Satz drahtlos gesteuerter und gleislos geführter Fahrgastfahrzeugplattformen (10), das dazu angepasst ist, den Satz drahtlos gesteuerter und gleislos geführter Fahrgastfahrzeugplattformen (10) während einer Vorführung durch wechselnde Kulissen zu steuern, und ein Vorführungselement-Steuergerät (5C), das ein Umgebungssteuergerät umfasst, wobei das Verfahren Folgendes umfasst:
a) Ermöglichen, dass ein vorgebebener Satz Fahrgäste an dem Lade- und Ausladebereich (7) für Fahrgäste in einen vorgegebenen Teilsatz des Satzes drahtlos gesteuerter und gleislos geführter Fahrgastfahrzeugplattformen (10), die innerhalb des Fahrbetriebraums (4) befördert werden können, einsteigt;
b) Positionieren des Satzes drahtlos gesteuerter und gleislos geführter Themenkulissen-Fahrzeugplattformen (20), die innerhalb des Fahrbetriebraums (4) befördert werden können, in eine räumliche Anfangsanordnung innerhalb des Fahrbetriebraums (4);
c) Verwenden des Steuersystems (5) zum Steuern von Beleuchtung, Projektion, Ton und anderen mit dem gesamten Fahrbetrieb-Vorführungserlebnis zusammenhängenden Vorführungselementen während einer Fahrbetriebvorführung;
d) Befördern des Satzes drahtlos gesteuerter und gleislos geführter Fahrgastfahrzeugplattformen (10) in den Fahrbetriebraum (4) zu einer vorgegebenen Zeit in der Fahrbetriebvorführung;
e) wenn bewirkt wird, dass die Fahrgäste in ihren drahtlos gesteuerten und gleislos geführten Fahrgastfahrzeugplattformen (10) einem Bereich von Kulissen zugewandt sind, der von dem Satz drahtlos gesteuerter und gleislos geführter Themenkulissen-Fahrzeugplattformen (20) definiert ist, Verwenden des Steuersystems (5) während der Fahrbetriebvorführung, um einen vorgegebenen Teilsatz des Satzes drahtlos gesteuerter und gleislos geführter Themenkulissen-Fahrzeugplattformen (20) untereinander zu choreographieren und zu wechseln;
f) an einem Ende der Fahrbetriebvorführung, Verwenden des Steuersystems (5), um die drahtlos gesteuerten und gleislos geführten Fahrzeugfahrgastplattformen an dem Ausladebereich zu positionieren; und
g) Ermöglichen, dass der vorgegebene Satz Fahrgäste an dem Ausladebereich aus den drahtlos gesteuerten und gleislos geführten Fahrzeugfahrgastplattformen aussteigt.

7. Verfahren nach Anspruch 6, ferner umfassend:
a) Ermöglichen, dass ein Fahrgast mit dem Fahrbetriebraum (4) interagiert; und
b) Bewirken, dass ein Bereich oder eine Sequenz der Fahrbetriebvorführung auf die Fahrgastinteraktion reagiert,
oder ferner umfassend:
c) Befördern des Satzes drahtlos gesteuerter und gleislos geführter Fahrgastfahrzeugplattformen (10) in den Fahrbetriebraum (4) in Gruppen drahtlos gesteuerter und gleislos geführter Fahrgastfahrzeugplattformen (10) durch eine Vielzahl von Vorführungsräumen innerhalb des Fahrbetriebraums (4);
d) Versehen jedes Vorführungsraums mit einem eigenen Satz drahtlos gesteuerter und gleislos geführter Themenkulissen-Fahrzeugplattformen (20); und
e) Ermöglichen, dass jede Gruppe drahtlos gesteuerter und gleislos geführter Fahrgastfahrzeugplattformen (10) während der Fahrbetriebvorführung gleichzeitig den Fahrbetriebraum (4) durchläuft.

8. Verfahren nach Anspruch 6, wobei die Fahrbetriebvorführung damit anfängt, dass der Satz drahtlos gesteuerter und gleislos geführter Fahrgastfahrzeugplattformen (10) in Gruppen drahtlos gesteuerter und gleislos geführter Fahrgastfahrzeugplattformen (10) gruppiert wird und, wenn die Fahrbetriebvorführung beginnt:
a) Bewegen der Gruppen drahtlos gesteuerter und gleislos geführter Fahrgastfahrzeugplattformen (10) voneinander weg; und
b) erneutes Kombinieren der Gruppen drahtlos gesteuerter und gleislos geführter Fahrgastfahrzeugplattformen (10) in unterschiedliche Gruppenanordnungen während der Fahrbetriebvorführung,
oder wobei das Steuersystem (5) den Satz drahtlos gesteuerter und gleislos geführter Themenkulissen-Fahrzeugplattformen (20) in einer Weise bewegt, um einen Durchgang zu öffnen oder zu schließen, die Größe eines Raums zu verringern oder zu vergrößern und ein Handlungselement zu verbergen oder zu offenbaren.

9. Verfahren nach Anspruch 6, ferner umfassend einen Satz drahtlos gesteuerter und gleislos geführter Figurenfahrzeugplattformen (30), die innerhalb des Fahrbetriebraums (4) angeordnet sind, wobei der Satz drahtlos gesteuerter und gleislos geführter Figurenfahrzeugplattformen (30) ein animationstragendes Fahrzeug (30) umfasst, das zur visuellen Interaktion mit Fahrgästen angepasst ist, wobei das Verfahren ferner Folgendes umfasst:
a) Anordnen des animationstragenden Fahrzeugs (30) an einem Anfangsort innerhalb des Fahrbetriebraums (4) zu einem Beginn der Fahrbetriebvorführung, wobei das animationstragende Fahrzeug (30) durch eine drahtlos gesteuerte und gleislos geführte Themenkulissen-Fahrzeugplattform (20) des Satzes drahtlos gesteuerter und gleislos geführter Themenkulissen-Fahrzeugplattformen (20) verborgen ist; und
b) zu einer vorgegebenen Zeit, Bewegen des animationstragenden Fahrzeugs (30), der drahtlos gesteuerten und gleislos geführten Themenkulissen-Fahrzeugplattform (20) oder sowohl des animationstragenden Fahrzeugs (30) als auch der drahtlos gesteuerten und gleislos geführten Themenkulissen-Fahrzeugplattform (20), um das animationstragende Fahrzeug (30) zu offenbaren.

10. Verfahren nach Anspruch 9, wobei:
a) die drahtlos gesteuerte und gleislos geführte Themenkulissen-Fahrzeugplattform (20) zwei drahtlos gesteuerte und gleislos geführte Themenkulissen-Fahrzeugplattformen (20) umfasst; und
b) das Bewegen des animationstragenden Fahrzeugs (30), der drahtlos gesteuerten und gleislos geführten Themenkulissen-Fahrzeugplattform (20) oder sowohl des animationstragenden Fahrzeugs (30) als auch der drahtlos gesteuerten und gleislos geführten Themenkulissen-Fahrzeugplattform (20), Folgendes umfasst.
i) Positionieren der zwei drahtlos gesteuerten und gleislos geführten Themenkulissen-Fahrzeugplattformen (20) zwischen dem animationstragenden Fahrzeug (30) und einer drahtlos gesteuerten und gleislos geführten Fahrgastfahrzeugplattform des Satzes drahtlos gesteuerter und gleislos geführter Fahrgastfahrzeugplattformen (10); und
ii) Bewegen der zwei drahtlos gesteuerten und gleislos geführten Themenkulissen-Fahrzeugplattformen (20) weg voneinander zu einer vorgegebenen Zeit.

11. Verfahren nach Anspruch 6, wobei der Fahrgastaufnahmebereich (11) eine freiliegende Bank umfasst und der Satz drahtlos gesteuerter und gleislos geführter Fahrgastfahrzeugplattformen (10) anfänglich gruppiert sind, um als Vorführraum zu erscheinen, der viele dieser Bänke umfasst, wobei das Verfahren ferner Folgendes umfasst:
a) wenn die Fahrbetriebvorführung anfängt, Bewirken, dass ein vorgegebener Satz Aktionen vor dem Satz drahtlos gesteuerter und gleislos geführter Fahrgastfahrzeugplattformen (10) stattfindet;
b) während die Fahrbetriebvorführung voranschreitet, Bewegen des Satzes drahtlos gesteuerter und gleislos geführter Fahrgastfahrzeugplattformen (10) in separat beabstandete drahtlos gesteuerte und gleislos geführter Fahrgastfahrzeugplattformen (10); und
c) Verwenden des Steuersystems (5), um die drahtlos gesteuerten und gleislos geführten Fahrgastfahrzeugplattformen auf choreographierte Weise jeweils in andere Handlungsräume zu schicken.

12. Verfahren nach Anspruch 6, ferner umfassend:
a) Bewirken, dass eine drahtlos gesteuert und gleislos geführte Fahrzeugfahrgastplattform einem Kulissenbereich zugewandt wird; und
b) Ändern einer Konfiguration des drahtlos gesteuerten und gleislos geführten Abschnitts oder Elements von Themenkulissen hinter der drahtlos gesteuerten und gleislos geführten Fahrzeugfahrgastplattform,
oder ferner umfassend:
c) Verwenden des Steuersystems (5) zum Steuern des vorgegebenen Satzes drahtlos gesteuerter und gleislos geführter Themenkulissen-Fahrzeugplattformen (20) während einer Vorführung, um eine Vielzahl von verschieden geformten Bereichen zu bilden; und
d) wobei das Darbieten veränderlicher Aspekte der mobilen Kulisse zu unterschiedlichen Zeiten für die Fahrgäste ferner das Umkonfigurieren des vorgegebenen Satzes drahtlos gesteuerter und gleislos geführter Themenkulissen-Fahrzeugplattformen (20) während einer Vorführung für unterschiedliche Kulissen umfasst.

13. Verfahren nach Anspruch 6, wobei:
a) der vorgegebene Satz drahtlos gesteuerter und gleislos geführter Fahrzeugfahrgastplattformen eine Vielzahl von drahtlos gesteuerten und gleislos geführten Fahrzeugfahrgastplattformen umfasst; und
b) das Verwenden des Steuersystems (5) zum Steuern des Satzes drahtlos gesteuerter und gleislos geführter Fahrzeugfahrgastplattformen durch wechselnde Kulissen während der Vorführung Folgendes umfasst:
i) Fahren der Vielzahl von drahtlos gesteuerten und gleislos geführten Fahrzeugfahrgastplattformen in Trupps durch eine Vielzahl von Vorführungsräumen, wobei jeder Raum seine eigene mobile Kulisse aufweist; und
ii) Ermöglichen, dass jeder Trupp gleichzeitig die Fahrbetriebvorführung durchläuft,
oder wobei das Verwenden des Steuersystems (5) ferner das Steuern des Satzes drahtlos gesteuerter und gleislos geführter Themenkulissen-Fahrzeugplattformen (20) während einer Vorführung umfasst, um eine Vielzahl von verschieden geformten Bereichen zu bilden, sodass Fahrgästen zu unterschiedlichen Zeiten veränderliche Aspekte der mobilen Kulisse dargeboten werden.

14. Verfahren nach Anspruch 6, wobei der Satz drahtlos gesteuerter und gleislos geführter Themenkulissen-Fahrzeugplattformen (20) als Irrgarten angeordnet ist, wobei das Verfahren ferner Folgendes umfasst:
a) Ermöglichen von Fahrgastentscheidungen darüber, welchem Weg innerhalb des Irrgartens gefolgt werden soll; und
b) Verwenden des Steuersystems (5), um die Anordnung von Irrgartenkomponenten zu wechseln, während die Fahrzeuge weiterfahren.

15. Verfahren nach Anspruch 6, ferner umfassend:
a) Ermöglichen, dass ein Fahrgast dynamisch mit der Fahrbetriebvorführung interagiert; und
b) Bewirken, dass ein Bereich oder eine Fahrbetriebvorführungssequenz auf die dynamische Interaktion des Fahrgasts reagiert.

## Revendications

1. Système de manège d'épouvante (1), comportant :
a) un espace de manège (4) ;
b) un ensemble de plates-formes pour véhicule à passagers, à commande sans fil et à guidage sans rail (10) en mesure d'être envoyées dans les limites de l'espace de manège (4), chaque plate-forme pour véhicule à passagers, à commande sans fil et à guidage sans rail (10) comportant :
i) une zone de réception de passagers (11) ;
ii) un système de propulsion de véhicule (10A), comportant :
(1) un générateur de mouvement mécanique configuré pour communiquer un mouvement de rotation ou de translation à la zone de réception de passagers (11) en une pluralité de degrés de liberté ; et
(2) un transporteur de véhicule ; et
iii) un dispositif de commande de mouvement de véhicule (10B) en communication fonctionnelle avec le système de propulsion de véhicule (10A) ;
c) un ensemble de plates-formes pour véhicule de décor à thème, à commande sans fil et à guidage sans rail (20) en mesure d'être envoyées dans les limites de l'espace de manège (4) ;
d) une zone d'embarquement et de débarquement (7) pour les passagers se trouvant à proximité de l'espace de manège (4), et
e) un système de commande (5), comportant :
i) un dispositif de commande de véhicule porteur de décor (SA) en communication fonctionnelle avec l'ensemble de plates-formes pour véhicule de décor à thème, à commande sans fil et à guidage sans rail (20) et adapté pour commander l'ensemble de plates-formes pour véhicule de décor à thème, à commande sans fil et à guidage sans rail (20) au cours d'un spectacle afin de former une pluralité de zones de formes variées dans les limites de l'espace de manège (4) présentant divers aspects de décor mobile à différents moments aux passagers, dans lequel l'étape consistant à commander l'ensemble de plates-formes pour véhicule de décor à thème (20) comporte l'étape consistant à ouvrir et/ou à fermer un passage au travers duquel les plates-formes pour véhicule à passagers, à commande sans fil et à guidage sans rail (10) peuvent être déplacées de telle sorte que plusieurs scènes distinctes occupent la même empreinte physique à différents moments au cours d'un spectacle ;
ii) un dispositif de commande de plate-forme pour véhicule à passagers (5B) en communication fonctionnelle avec l'ensemble de plates-formes pour véhicule à passagers, à commande sans fil et à guidage sans rail (10) et adapté pour commander l'ensemble de plates-formes pour véhicule à passagers, à commande sans fil et à guidage sans rail (10) par le changement du décor au cours d'un spectacle ; et
iii) un dispositif de commande d'élément de spectacle (5C), comportant un dispositif de commande d'environnement.

2. Système de véhicules de manège selon la revendication 1, comportant par ailleurs un ensemble prédéterminé d'éléments statiques se trouvant au moins partiellement dans les limites de l'espace de manège (4).

3. Système de véhicules de manège selon la revendication 1, dans lequel :
a) le système comporte par ailleurs un ensemble de plates-formes pour véhicule à personnage, à commande sans fil et à guidage sans rail (30) en mesure d'être envoyées de manière sélective et contrôlée dans les limites de l'espace de manège (4) ; et
b) le système de commande (5) comporte par ailleurs un dispositif de commande de plate-forme pour véhicule à personnage (5D) en communication fonctionnelle avec l'ensemble de plates-formes pour véhicule à personnage, à commande sans fil et à guidage sans rail (30) et adapté pour commander l'ensemble de plates-formes pour véhicule à personnage, à commande sans fil et à guidage sans rail (30) par le changement du décor au cours d'un spectacle.

4. Système de manège selon la revendication 3, dans lequel l'ensemble de plates-formes pour véhicule à personnage, à commande sans fil et à guidage sans rail (30) comporte un véhicule porteur d'animation (30) adapté à des fins d'interaction visuelle avec des passagers.

5. Système de manège selon la revendication 1, dans lequel l'espace de manège (4) est configuré pour permettre le déplacement de l'ensemble de plates-formes pour véhicule de décor à thème, à commande sans fil et à guidage sans rail (20) au cours d'un spectacle pour reconfigurer l'espace de manège (4) pour différentes scènes et permettre à une pluralité de scènes de partager la même empreinte, ou dans lequel l'espace de manège (4) comporte un espace divisé en zones de scène (4A, 4B), chacune avec ses propres traitements esthétiques et son propre ensemble de plates-formes pour véhicule de décor à thème, à commande sans fil et à guidage sans rail (20).

6. Procédé permettant de mettre en œuvre une expérience à base de manège, au moyen d'un système de manège d'épouvante (1) comportant un espace de manège (4) ;
un ensemble de plates-formes pour véhicule à passagers, à commande sans fil et à guidage sans rail (10) en mesure d'être envoyées dans les limites de l'espace de manège (4), chaque plate-forme pour véhicule à passagers, à commande sans fil et à guidage sans rail comportant une zone de réception de passagers (11), un système de propulsion de véhicule (10A) qui comporte un générateur de mouvement mécanique configuré pour communiquer un mouvement de rotation ou de translation à la zone de réception de passagers (11) en une pluralité de degrés de liberté, et un transporteur de véhicule, et un dispositif de commande de mouvement de véhicule (10B) en communication fonctionnelle avec le système de propulsion de véhicule (10A) ;
un ensemble de plates-formes pour véhicule de décor à thème, à commande sans fil et à guidage sans rail (20) en mesure d'être envoyées dans les limites de l'espace de manège (4) ; une zone d'embarquement et de débarquement (7) pour les passagers se trouvant à proximité de l'espace de manège (4) ; et
un système de commande (5) qui comporte un dispositif de commande de véhicule porteur de décor (5A) en communication fonctionnelle avec l'ensemble de plates-formes pour véhicule de décor à thème, à commande sans fil et à guidage sans rail (20) et adapté pour commander l'ensemble de plates-formes pour véhicule de décor à thème, à commande sans fil et à guidage sans rail (20) au cours d'un spectacle afin de former une pluralité de zones de formes variées dans les limites de l'espace de manège (4) présentant divers aspects de décor mobile à différents moments aux passagers, y compris l'ouverture et/ou la fermeture d'un passage au travers duquel les plates-formes pour véhicule à passagers, à commande sans fil et à guidage sans rail (10) peuvent être déplacées de telle sorte que plusieurs scènes distinctes occupent la même empreinte physique à différents moments au cours d'un spectacle, un dispositif de commande de plate-forme pour véhicule à passagers (5B) en communication fonctionnelle avec l'ensemble de plates-formes pour véhicule à passagers, à commande sans fil et à guidage sans rail (10) et adapté pour commander l'ensemble de plates-formes pour véhicule à passagers, à commande sans fil et à guidage sans rail (10) par le changement du décor au cours d'un spectacle, et un dispositif de commande d'élément de spectacle (5C), comportant un dispositif de commande d'environnement, le procédé comportant les étapes consistant à :
a) permettre à un ensemble prédéterminé de passagers de monter à bord d'un sous-ensemble prédéterminé de l'ensemble de plates-formes pour véhicule à passagers, à commande sans fil et à guidage sans rail (10) en mesure d'être envoyées dans les limites de l'espace de manège (4) au niveau de la zone d'embarquement et de débarquement (7) pour les passagers ;
b) positionner l'ensemble de plates-formes pour véhicule de décor à thème, à commande sans fil et à guidage sans rail (20) en mesure d'être envoyées dans les limites de l'espace de manège (4) en un agencement spatial initial dans les limites de l'espace de manège (4) ;
c) utiliser le système de commande (5) pour commander l'éclairage, la projection, l'audio et d'autres éléments du spectacle se rapportant à l'expérience globale du spectacle à manèges au cours d'un spectacle à manèges ;
d) envoyer l'ensemble de plates-formes pour véhicule à passagers, à commande sans fil et à guidage sans rail (10) jusque dans l'espace de manège (4) à un moment prédéterminé dans le spectacle à manèges ;
e) lorsque les passagers dans leurs plates-formes pour véhicule à passagers, à commande sans fil et à guidage sans rail (10) sont amenés à faire face à une zone de décor définie par l'ensemble de plates-formes pour véhicule de décor à thème, à commande sans fil et à guidage sans rail (20), utiliser le système de commande (5) pour chorégraphier mutuellement et changer un sous-ensemble prédéterminé de l'ensemble de plates-formes pour véhicule de décor à thème, à commande sans fil et à guidage sans rail (20) au cours du spectacle à manèges ;
f) à la fin du spectacle à manèges, utiliser le système de commande (5) pour positionner les plates-formes pour passagers de véhicule à commande sans fil et à guidage sans rail dans la zone de débarquement ; et
g) permettre à l'ensemble prédéterminé de passagers de sortir des plates-formes pour passagers de véhicule à commande sans fil et à guidage sans rail dans la zone de débarquement.

7. Procédé selon la revendication 6, comportant par ailleurs les étapes consistant à :
a) permettre à un passager d'interagir avec l'espace de manège (4) ; et
b) faire réagir une zone ou une séquence du spectacle à manèges face à l'interaction du passager,
ou comportant par ailleurs les étapes consistant à :
c) envoyer l'ensemble de plates-formes pour véhicule à passagers, à commande sans fil et à guidage sans rail (10) jusque dans l'espace de manège (4) en groupes de plates-formes pour véhicule à passagers, à commande sans fil et à guidage sans rail (10) dans une pluralité d'espaces de spectacle dans les limites de l'espace de manège (4) ;
d) fournir à chaque espace de spectacle son propre ensemble de plates-formes pour véhicule de décor à thème, à commande sans fil et à guidage sans rail (20) ; et
e) permettre à chaque groupe de plates-formes pour véhicule à passagers, à commande sans fil et à guidage sans rail (10) de circuler simultanément dans l'espace de manège (4) au cours du spectacle à manèges.

8. Procédé selon la revendication 6, dans lequel le spectacle à manèges commence avec l'ensemble de plates-formes pour véhicule à passagers, à commande sans fil et à guidage sans rail (10) groupées en groupes de plates-formes pour véhicule à passagers, à commande sans fil et à guidage sans rail (10) et, lorsque le spectacle à manèges commence, le procédé comporte les étapes consistant à :
a) déplacer les groupes de plates-formes pour véhicule à passagers, à commande sans fil et à guidage sans rail (10) pour les éloigner les uns des autres ; et
b) recombiner les groupes de plates-formes pour véhicule à passagers, à commande sans fil et à guidage sans rail (10) en différents agencements de groupes au cours du spectacle à manèges,
ou dans lequel le système de commande (5) déplace l'ensemble de plates-formes pour véhicule de décor à thème, à commande sans fil et à guidage sans rail (20) de manière à ouvrir ou à fermer un passage, à réduire ou à augmenter la taille d'un espace, et à cacher ou à révéler un élément de l'histoire.

9. Procédé selon la revendication 6, comportant par ailleurs un ensemble de plates-formes pour véhicule à personnage, à commande sans fil et à guidage sans rail (30) se trouvant dans les limites de l'espace de manège (4), l'ensemble de plates-formes pour véhicule à personnage, à commande sans fil et à guidage sans rail (30) comportant un véhicule porteur d'animation (30) adapté à des fins d'interaction visuelle avec les passagers, le procédé comportant par ailleurs les étapes consistant à :
a) disposer le véhicule porteur d'animation (30) à un emplacement initial dans les limites de l'espace de manège (4) au début du spectacle à manèges, le véhicule porteur d'animation (30) étant caché de la vue par une plate-forme pour véhicule de décor à thème, à commande sans fil et à guidage sans rail (20) de l'ensemble de plates-formes pour véhicule de décor à thème, à commande sans fil et à guidage sans rail (20) ; et
b) à un moment prédéterminé, déplacer le véhicule porteur d'animation (30), la plate-forme pour véhicule de décor à thème, à commande sans fil et à guidage sans rail (20), ou à la fois le véhicule porteur d'animation (30) et la plate-forme pour véhicule de décor à thème, à commande sans fil et à guidage sans rail (20) pour révéler le véhicule porteur d'animation (30).

10. Procédé selon la revendication 9, dans lequel :
a) la plate-forme pour véhicule de décor à thème, à commande sans fil et à guidage sans rail (20) comporte deux plates-formes pour véhicule de décor à thème, à commande sans fil et à guidage sans rail (20) ; et
b) l'étape consistant à déplacer le véhicule porteur d'animation (30), la plate-forme pour véhicule de décor à thème, à commande sans fil et à guidage sans rail (20), ou à la fois le véhicule porteur d'animation (30) et la plate-forme pour véhicule de décor à thème, à commande sans fil et à guidage sans rail (20), comporte les étapes consistant à :
i) positionner les deux plates-formes pour véhicule de décor à thème, à commande sans fil et à guidage sans rail (20) entre le véhicule porteur d'animation (30) et une plate-forme pour véhicule à passagers, à commande sans fil et à guidage sans rail de l'ensemble de plates-formes pour véhicule à passagers, à commande sans fil et à guidage sans rail (10) ; et
ii) déplacer les deux plates-formes pour véhicule de décor à thème, à commande sans fil et à guidage sans rail (20) pour les éloigner l'une de l'autre à un moment prédéterminé.

11. Procédé selon la revendication 6, dans lequel la zone de réception de passagers (11) comporte un banc exposé et les plates-formes de l'ensemble de plates-formes pour véhicule à passagers, à commande sans fil et à guidage sans rail (10) sont initialement groupées pour apparaître sous la forme d'un théâtre ayant plusieurs de ces bancs, le procédé comportant par ailleurs les étapes consistant à :
a) au début du spectacle à manèges, amener un ensemble prédéterminé d'actions à se produire devant l'ensemble de plates-formes pour véhicule à passagers, à commande sans fil et à guidage sans rail (10) ;
b) au fur et à mesure que le spectacle à manèges progresse, déplacer l'ensemble de plates-formes pour véhicule à passagers, à commande sans fil et à guidage sans rail (10) en des plates-formes pour véhicule à passagers, à commande sans fil et à guidage sans rail (10) espacées séparément ; et
c) utiliser le système de commande (5) pour envoyer chaque plate-forme pour véhicule à passagers, à commande sans fil et à guidage sans rail dans d'autres espaces de l'histoire de manière chorégraphiée.

12. Procédé selon la revendication 6, comportant par ailleurs les étapes consistant à :
a) amener une plate-forme pour passagers de véhicule, à commande sans fil et à guidage sans rail à faire face à une zone de décor ; et
b) changer une configuration de la section à commande sans fil et à guidage sans rail ou de l'élément de décor à thème derrière la plate-forme pour passagers de véhicule, à commande sans fil et à guidage sans rail,
ou comportant par ailleurs l'étape consistant à :
c) utiliser le système de commande (5) pour commander l'ensemble prédéterminé de plates-formes pour véhicule de décor à thème, à commande sans fil et à guidage sans rail (20) au cours d'un spectacle afin de former une pluralité de zones de formes variées ; et
d) l'étape consistant à présenter divers aspects du décor mobile à des différents moments aux passagers comporte par ailleurs l'étape consistant à reconfigurer l'ensemble prédéterminé de plates-formes pour véhicule de décor à thème, à commande sans fil et à guidage sans rail (20) au cours d'un spectacle pour différentes scènes.

13. Procédé selon la revendication 6, dans lequel :
a) l'ensemble prédéterminé de plates-formes pour passagers de véhicule à commande sans fil et à guidage sans rail comporte une pluralité de plates-formes pour passagers de véhicule à commande sans fil et à guidage sans rail ; et
b) l'étape consistant à utiliser le système de commande (5) pour commander l'ensemble de plates-formes pour passagers de véhicule à commande sans fil et à guidage sans rail par le changement du décor au cours du spectacle comporte les étapes consistant à :
i) faire fonctionner la pluralité de plates-formes pour passagers de véhicule à commande sans fil et à guidage sans rail en convois dans une pluralité d'espaces de spectacle, chaque espace ayant son propre décor mobile ; et
ii) permettre à chaque convoi de parcourir simultanément le cycle du spectacle à manèges ;
ou dans lequel l'étape consistant à utiliser le système de commande (5) comporte par ailleurs l'étape consistant à commander l'ensemble de plates-formes pour véhicule de décor à thème, à commande sans fil et à guidage sans rail (20) au cours d'un spectacle pour former une pluralité de zones de formes variées, présentant divers aspects du décor mobile à différents moments aux passagers.

14. Procédé selon la revendication 6, dans lequel les plates-formes de l'ensemble de plates-formes pour véhicule de décor à thème, à commande sans fil et à guidage sans rail (20) sont agencées sous la forme d'un labyrinthe, le procédé comportant par ailleurs les étapes consistant à :
a) permettre aux passagers de choisir les chemins à emprunter dans les limites du labyrinthe ; et
b) utiliser le système de commande (5) pour modifier la disposition des composants du labyrinthe au fur et à mesure que les véhicules progressent.

15. Procédé selon la revendication 6, comportant par ailleurs les étapes consistant à :
a) permettre à un passager d'interagir dynamiquement avec le spectacle à manèges ; et
b) faire réagir une zone ou une séquence du spectacle à manèges en réponse à une interaction dynamique du passager.
